# EUROPÄISCHE PATENTSCHRIFT

(11) **EP 1 419 339 B1**
(45) Veröffentlichungstag und Bekanntmachung des Hinweises auf die Patenterteilung: **25.04.2007**
(21) Anmeldenummer: 02767096.7
(22) Anmeldetag: 13.08.2002
(51) Int. Cl.: F16N 7/32, B01D 53/00

(54) **VERFAHREN UND VORRICHTUNG ZUM SCHMIEREN VON SCHMIERSTELLEN MIT SCHMIERSTOFF-MINIMALMENGEN**
METHOD AND DEVICE FOR THE LUBRICATION OF LUBRICATING POINTS WITH MINIMAL QUANTITIES OF LUBRICANT
PROCEDE ET DISPOSITIF PERMETTANT DE LUBRIFIER DES POINTS DE LUBRIFICATION AVEC DES QUANTITES MINIMALES DE LUBRIFIANT

(30) Priorität: 17.08.2001 DE 10139347
(43) Veröffentlichungstag der Anmeldung: 19.05.2004
(60) Teilanmeldung: 04007314.0
(73) Patentinhaber: ELHA-MASCHINENBAU LIEMKE KG, D-33161 Hövelhof (DE)
(72) Erfinder: VULLHORST, Franz, 33161 Hövelhof (DE)
(74) Vertreter: Ostermann, Thomas
(86) Internationale Anmeldenummer: PCT/DE2002/002984
(87) Internationale Veröffentlichungsnummer: WO 2003/019066

(56) Entgegenhaltungen:
- EP-A- 0 440 038
- FR-A- 1 268 093
- US-A- 2 954 844
- US-A- 3 939 944
- US-A- 3 941 210
- US-A- 5 715 912

## Beschreibung

Die Erfindung betrifft ein Verfahren nach dem Oberbegriff des Patentanspruchs 1.

Weiterhin betrifft die Erfindung eine Vorrichtung zum Schmieren von Schmierstellen mit Schmierstoff-Minimalmengen nach dem Oberbegriff des Patentanspruchs 4.

Aus der DE 40 02 846 C2 ist ein Verfahren zum Schmieren und Kühlen von zerspanenden Werkzeugen mit Schmierstoff-Minimalmengen bekannt, bei dem Schmierstofftropfen einer mit einer Kugelpackung versehenen Kammer zugeführt werden, so dass mittels eines mitreißenden Druckluftstromes ein Zerstäubungseffekt erzielt wird. Die hierbei erzielte Schmierstofftropfengröße liegt im Bereich von >10 µm. Zwar ermöglicht das bekannte Verfahren bzw. die bekannte Vorrichtung eine relativ einfache Schmierstoffdosierung, da die Tröpfchengröße im Makrobereich liegt. Der Ausstoß eines umweltschädigenden Ölnebels, bei dem die Tröpfchengröße des Schmierstoffes noch kleiner ist, wird verhindert. Nachteilig an dem bekannten Verfahren ist jedoch, dass der Schmierstoff in zerstäubter Form mit einer relativ kleinen Tropfengröße bereitgestellt wird. Dadurch, dass die Schmierstofftropfen mit relativ großer Geschwindigkeit der Schmierstelle zugeführt werden, ist die Anwendung auf das Schmieren und Kühlen von zerspanendem Werkzeug beschränkt.

Aus der DE 196 17 752 A1 ist ein Verfahren und eine Vorrichtung zum Schmieren von Schmierstellen mit Schmierstoff-Minimalmengen bekannt, bei dem der Schmierstoff in Mikrotropfenform als Bestandteil eines Flüssigkeits-Gas-Gemisches der Schmierstelle zugeführt wird. Dieser Stand der Technik hat somit eine Vernebelungseinrichtung zum Gegenstand, in der der Schmierstoff mit einem gasförmigen Trägermedium zu einem Schmierstoffnebel vermischt ist, der der Schmierstelle zugeführt wird. Nachteilig an dem bekannten Verfahren bzw. der Vorrichtung ist, dass der Schmierstoff in besonders kleiner Tropfengröße - quasi als Nebel - an der Schmierstelle freigegeben wird, was sich hinsichtlich des Aspektes des Umweltschutzes ungünstig auswirkt.

Aus der US 3 941 210 A ist eine Vorrichtung zum Schmieren von Schmierstellen mit Schmierstoff-Minimalmengen bekannt, wobei ein aus Schmierstoff und einem gasförmigen Trägermedium zusammengesetzter Schmierstoffnebel einer Kondensatoreinrichtung zur Verfügung gestellt wird. Die Kondensatoreinrichtung umfasst eine Kammer, die mit einer Mehrzahl von Kugeln gefüllt ist. Die die Kugeln enthaltende Kammer wird durch senkrecht zur Strömungsrichtung angeordnete Begrenzungsscheiben abgeschlossen, die jeweils Durchtrittsöffnungen für den Schmierstoffnebel aufweisen. Stromabwärts weit hinter der mit Kugeln gefüllten Kammer ist eine Düsenbohrung angeordnet, so dass relativ kleine Schmierstofftropfen an der Schmierstelle abgegeben werden.

Aus der FR 1 268 093 ist eine Vorrichtung zum Schmieren von Schmierstellen mit Schmierstoff-Minimalmengen bekannt, bei der eine Vernebelungseinrichtung vorgesehen ist zum Erzeugen eines Schmierstoffnebels. Der Schmierstoffnebel besteht aus einem gasförmigen Trägermedium und Miltrotropfen des Schmierstoffes. Die vernebelungseinrichtung ist über eine Zuführleitung mit einer im Bereich der Schmierstelle angeordneten Kondensatoreinrichtung verbunden. Der Aufbau der Kondensatoreinrichtung unterscheidet sich ebenfalls grundsätzlich von der Tropfenabscheidungseinrichtung gemäß der Erfindung. Die bekannte Kondensatoreinrichtung ermöglicht lediglich die Abscheidung von Schmierstofftropfen im Mikrobereich.

Aus der US 2 954 844 ist eine Vorrichtung zum Schmieren von Schmierstellen mit Schmierstoffminimalmengen bekannt, bei der mittels einer Tropfenabscheidungseinrichtung aus einem Schmierstoffnebel Schmierstofftropfen im Mikrobereich abgeschieden werden.

Aufgabe der vorliegenden Erfindung ist es, ein Verfahren und eine Vorrichtung zum Schmieren von Schmierstellen mit Schmierstoff-Minimalmengen anzugeben, so dass auf einfache Weise eine permanente Schmierung der Schmierstelle mit relativ großen Schmierstofftropfen gewährleistet wird, wobei der Verbrauch an Schmierstoff relativ gering gehalten werden kann.

Zur Lösung dieser Aufgabe weist das erfindungsgemäße Verfahren die Merkmale des Patentanspruchs 1 auf.

Der Vorteil des erfindungsgemäßen Verfahrens besteht darin, dass sich durch das vorsehen von durchbrochenen Abscheidungsflächen in einer Kammer sowie das Einspritzen des Schmierstoffnebels unter erhöhter Geschwindigkeit in die Kammer auf einfache Weise eine im Wesentlichen vollständige Abscheidung des Schmierstoffes von dem gasförmigen Trägermedium unter Bildung von Schmierstofftropfen im mm-Bereich erzielen lässt. Es erfolgt eine punktuelle Abgabe der Schmierstofftropfen an der Schmierstelle, während der mit Druck versehene Strom des gasförmigen Trägermediums dazu genutzt werden kann, störende Schmutzpartikel aus dem Bereich der Schmierstelle fernzuhalten. Grundgedanke der Erfindung ist es, Mittel vorzusehen, damit eine fast vollständige Trennung von Schmierstoff einerseits und den Schmierstoff transportierenden gasförmigen Trägermedium andererseits gewährleistet ist. Der von dem gasförmigen Trägermedium getrennte Schmierstoff kann den gewünschten Schmierstellen zugeführt werden, wobei die Schmierstofftropfen in einem vorgegebenen zeitlichen Abstand abgegeben werden. Vorteilhaft kann durch die Formgebung der Düse die Schmierstoffmenge gesteuert bzw. reguliert werden, so dass der Verbrauch an Schmierstoff relativ gering ist. Beispielsweise kann die Düse an einer offenen Lauffläche einer Linearführung angeordnet sein, so dass die Linearführung ständig geschmiert wird, wobei der Abstand der Tröpfchenabgabe an die Erfordernisse der Linearführung angepasst ist. Hierdurch ergibt sich eine Quasi-Permanentschmierung, die zum einen eine sparsame Schmierung und zum anderen eine Entfernung von störenden schmutzpartikeln bewirkt.

Nach einer Weiterbildung des erfindungsgemäßen Verfahrens kann der Druck des Schmierstoffnebels gesteuert werden, so dass die Menge der abgegebenen Schmierstofftropfen eingestellt werden kann.

Zur Lösung der Aufgabe weist die erfindungsgemäße Vorrichtung die Merkmale des Patentanspruchs 4 auf.

Die erfindungsgemäße Vorrichtung weist vorteilhaft eine Tropfenabscheidungseinrichtung auf, in der eine fast vollständige Trennung des Schmierstoffes von dem gasförmigen Trägermedium erfolgt. Grundgedanke der Erfindung ist es, zum einen eine Vernebelungseinrichtung vorzusehen, mittels derer ein Schmierstoffnebel bestehend aus einem Gemisch von gasförmigem Trägermedium und Mikrotropfen des Schmierstoffes gebildet wird, damit der Schmierstoff auf einfache Weise über eine Zuführleitung über lange Strecken an die Schmierstelle transportiert werden kann. Durch Vorsehen der Tropfenabscheidungseinrichtung an der Schmierstelle wird der Schmierstoff in einer vorgegebenen Tropfengröße im mm-Bereich aus dem Schmierstoffnebel "herausgefiltert" und unmittelbar an die Schmierstelle abgegeben. Aufgrund der fast vollständigen Trennung des Schmierstoffes von dem gasförmigen Trägermedium kann eine wirkungsvolle Schmierung und zuverlässiges Entfernen von unerwünschten Schmutzpartikeln an der Schmierstelle erfolgen. Da das gasförmige Trägermedium weitgehend frei von Schmierstoffpartikeln ist, wirkt sich die Abgabe des gasförmigen Trägermediums nicht umweltschädigend aus.

Nach einer Weiterbildung der erfindungsgemäßen Vorrichtung sind die Abscheidungsflächen gleichmäßig und gleichförmig ausgebildet, so dass in Strömungsrichtung nach und nach eine Trennung des Schmierstoffes von dem gasförmigen Trägermedium erfolgen kann.

Nach einer Weiterbildung der Erfindung werden die Abscheidungsflächen durch eine Kugelpackung gebildet, die über eine Mehrzahl von gleichmäßig verteilt angeordneten und zueinander beweglichen Kugeln besteht.

Ausführungsbeispiele der Erfindung werden nachfolgend anhand der Zeichnungen näher erläutert.

Es zeigen:
- Figur 1: eine schematische Darstellung einer Schmierstellensteuereinrichtung, mittels derer eine Mehrzahl von Schmierstellen an Maschinenbaugruppen mit Schmierstoff versorgt wird,
- Figur 2: eine perspektivische Darstellung einer Wälzlagerführung mit einem auf einer Führungsschiene verschiebbar gelagerten Führungswagen und einem seitlich an dem Führungswagen anzuflanschenden Ansatzteil,

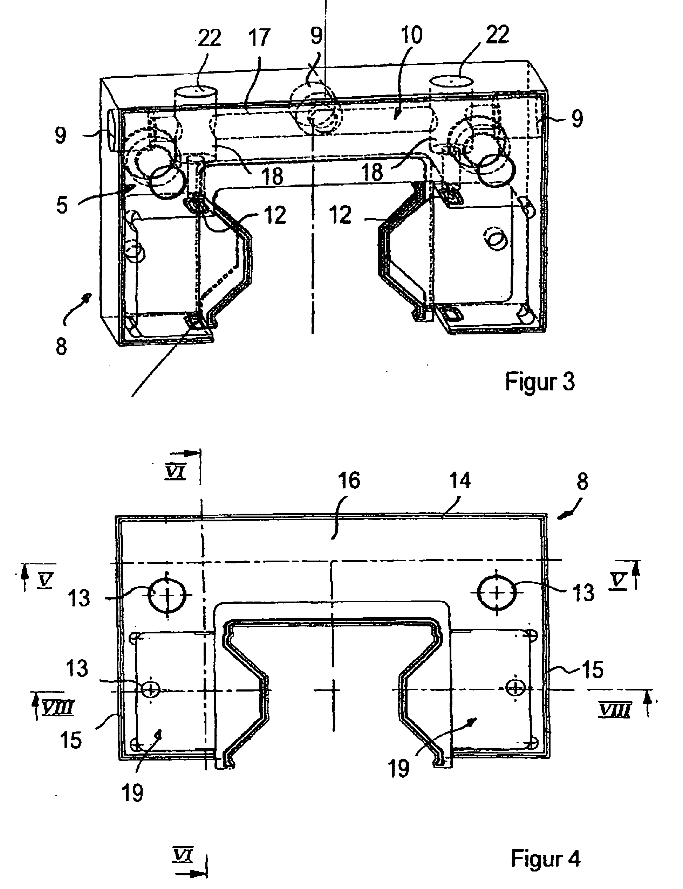

- Figur 3: eine perspektivische Darstellung des Ansatzteils,
- Figur 4: eine Vorderansicht des Ansatzteils,

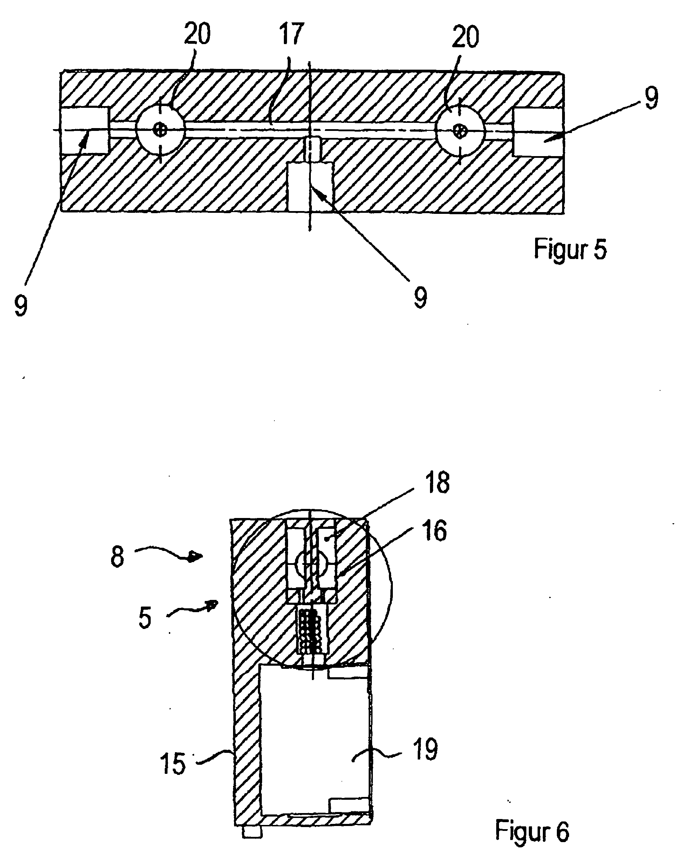

- Figur 5: einen Schnitt durch das Ansatzteil entlang der Linie V-V in Figur 4,
- Figur 6: einen Schnitt durch das Ansatzteil entlang der Linie VI-VI gemäß Figur 4,
- Figur 7: eine vergrößerte Darstellung eines Teilbereiches des Ansatzteils gemäß Figur 6,
- Figur 8: einen Schnitt durch das Ansatzteil entlang der Linie VIII-VIII gemäß Figur 4,
- Figur 9: eine perspektivische Darstellung eines aufgeschnittenen Trennelementes nach einer alternativen Ausführungsform und
- Figur 10: einen Querschnitt durch ein Verbindungselement mit einem eingesetzten Trennelement.

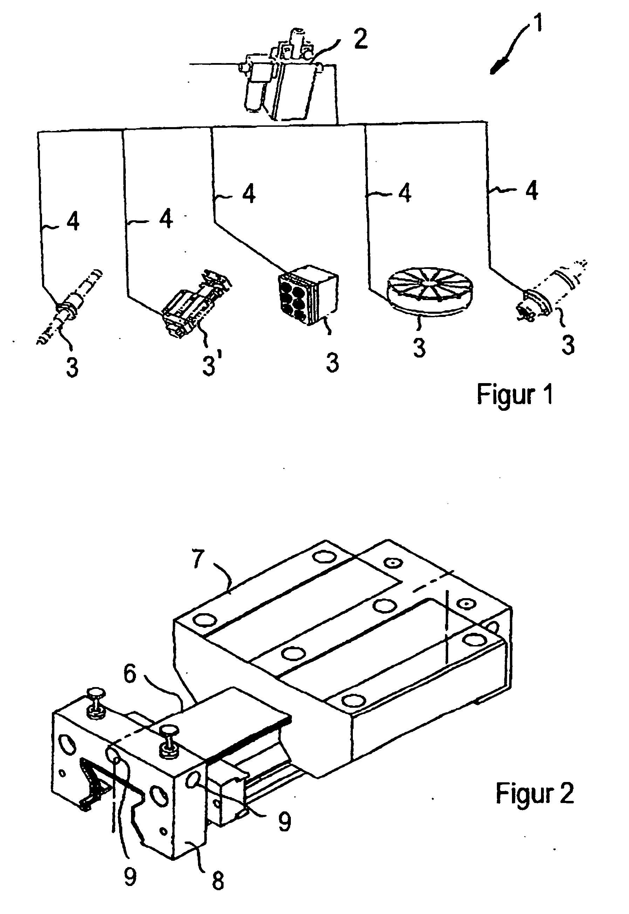

In Figur 1 ist eine Schmierstellensteuereinrichtung 1 dargestellt, die im wesentlichen aus einer Vernebelungseinrichtung 2, einer Mehrzahl von Schmierstellen 3, 3' sowie die vernebelungseinrichtung 2 mit den einzelnen Schmierstellen 3, 3' verbindenden Zuführleitungen besteht. Die Vernebelungseinrichtung 2 dient zur Erzeugung eines Schmierstoffnebels, der aus einem Gemisch von gasförmigem Trägermedium, vorzugsweise Luft, und Mikrotropfen des Schmierstoffes gebildet ist. Zu diesem Zweck werden der Vernebelungseinrichtung 2 zum einen der Schmierstoff und zum anderen das gasförmige Trägermedium zugeführt. Die Vernebelung kann entsprechend einem in der Druckschrift DE 40 02 846 C2 beschriebenen verfahren erfolgen. Über die Zuführleitungen 4 wird der Schmierstoffnebel zu den einzelnen Schmierstellen 3, 3' zugeleitet. Zur Einstellung des Schmierstoffnebeldrucks ist im Bereich der Vernebelungseinrichtung 2 und/oder den einzelnen Schmierstellen 3, 3' jeweils ein nicht dargestelltes Druckventil zugeordnet.

Jeder Schmierstelle 3, 3' ist eine Tropfenabscheidungseinrichtung 5 (Trennelement) zugeordnet, deren Funktion beispielhaft für die als Wälzlagerführung ausgebildete Schmierstelle 3` im Folgenden beschrieben wird. Die Zuführleitungen können zu unterschiedlichen Maschinenbaugruppen führen, so dass an den Schmierstellen 3 beispielsweise ein Kugelgewindetrieb, ein Mehrspindelkopf, ein Rundschalttisch oder eine Arbeitsspindel angeordnet sein kann, siehe Symbol in Figur 1 von links nach rechts angeordnet mit Ausnahme der Schmierstelle 3' an der Wälzlagerführung.

Wie deutlicher aus Figur 2 zu ersehen ist, besteht die Wälzlagerführung aus einer Führungsschiene 6, auf der ein Führungswagen 7 verschiebbar angeordnet ist. Seitlich an der Führungsschiene 6 ist ein Ansatzteil 8 angeordnet, das zur Bereitstellung des Schmierstoffs an der Schmierstelle 3' dient. Zu diesem Zweck weist das Ansatzteil 8 eine Einlassöffnung 9 auf, an der ein Ende der Zuführungsleitung 4 angeschlossen ist zur Einleitung des Schmierstoffnebels in das Ansatzteil 8. Weiterhin weist das Ansatzteil 8 eine Kanalanordnung 10 auf, durch die der Schmierstoffnebel geführt wird, insbesondere zu der Tropfenabscheidungseinrichtung 5. Die Tropfenabscheidungseinrichtung 5 bewirkt eine Trennung des Schmierstoffs von dem gasförmigen Trägermedium, so dass der Schmierstoff in Schmierstofftropfenform zusammen mit dem Trägermedium durch mindestens eine Auslassöffnung 12 an die Schmierstelle 3 abgegeben wird. Die Auslassöffnung ist als Schlitz ausgebildet mit einer Breite von ca. 0,6 mm. Alternativ kann der Schlitz auch als eine Mehrzahl von über die Querfläche verteilt angeordnete Bohrungen ausgebildet sein.

Das Ansatzteil 8 weist Befestigungsbohrungen 13 auf, mittels derer das Ansatzteil 8 an den Führungswagen 7 angeschraubt werden kann. Das Ansatzteil 8 besteht aus einem Grundkörper 14, der C-förmig ausgebildet ist und insbesondere auf einer Innenseite von zwei Schenkeln 15 an die Kontur der Führungsschiene 6 angepasst ist. Die Schenkeln 15 sind über ein Basisteil 16 miteinander verbunden. Das Basisteil 16 weist im Wesentlichen die Kanalanordnung 10 auf, wobei nach der vorliegenden Ausführungsform drei Einlassöffnungen 9 vorgesehen sind. Zum einen sind zwei gegenüberliegende Einlassöffnungen 9 an den Stirnseiten des Basisteils 16 angeordnet und zum anderen auf einer dem Führungswagen 7 abgewandten Längsseite des Basisteils 16.

Von den Einlassöffnungen 9 erstrecken sich Kanalzuführungen zu einem im wesentlichen in Längsrichtung des Basisteils 16 erstreckenden Kanal 17, von dem aus im Bereich der Schenkel 15 jeweils ein querverlaufender Querkanal 18 in Richtung der Schenkel 15 verläuft. Die Querkanäle 18 führen zu den jeweils den Schenkeln 15 zugeordneten Auslassöffnungen 12. Die Auslassöffnungen 12 grenzen an jeweils eine Ausnehmung 19 der Schenkel 15 an, die zur Aufnahme jeweils eines nicht dargestellten Umlenkelementes vorgesehen sind. Durch das Umlenkelement wird eine Verzweigung und unmittelbare zuführung der Schmierstofftropfen zu den Wälzelementen der Wälzlagerführung 3' erzielt.

Die Querkanäle 18 bestehen jeweils aus einem stromaufwärts angeordneten breiten Abschnitt 20 und einem stromabwärts angeordneten schmalen Abschnitt 21. Der breite Abschnitt 20 des Querkanals 18 ist über den Kanal 17 hinaus verlängert bis zu einer Seitenfläche des Grundkörpers 14 ausgebildet, so dass durch eine später verschließbare Einsetzöffnung 22 ein Einsatzelement 23 in den breiten Abschnitt 20 eingesetzt werden kann. Das Einsatzelement 23 besteht aus einem Abstandsbolzen 24, dessen Durchmesser kleiner ist als der Durchmesser des Querkanals 18. An den gegenüberliegenden Enden des Abstandsbolzens 24 sind kolbenartige Scheiben 25, 26 angeordnet. Die auf einer dem schmalen Abschnitt 21 des Querkanals 18 abgewandten Seite des Abstandsbolzens 24 angeordnete Scheibe 25 ist als massive Verschlussscheibe ausgebildet und dient zum verschließen bzw. Absperren des Querkanals 18 zur Außenseite des Grundkörpers 14 hin. Auf diese weise wird ein Entweichen des Schmierstoffnebels verhindert.

Die dem schmalen Abschnitt 21 des Querkanals 18 zugewandten Scheibe 26 ist als Düsenscheibe 26 ausgebildet, und weist ein, zwei oder mehrere Durchtrittskanäle 27 auf, die koaxial zu dem Querkanal 18 verlaufen und eine Verbindung schaffen zwischen dem durch die Düsenscheibe 26 getrennten Raum des breiten Abschnitts 20 und den eine Kammer bildenden schmalen Abschnitt 21. Die Düsenscheibe 26 weist einen zu dem Durchmesser des breiten Abschnitts 20 korrespondierenden Durchmesser auf, so dass der Schmierstoffnebel nur durch die Durchtrittskanäle 27 in die Kammer 21 gelangen kann.

Bevor das Einsatzelement 23 in den Querkanal 18 eingesetzt wird, wird der schmale Abschnitt 21 mit einer Mehrzahl von beweglich angeordneten Kugeln 28 gefüllt, die eine Kugelpackung bilden. Die Kammer 21 wird durch die Kugeln 28 vollständig ausgefüllt, wobei die Kugeln 28 aus einer in Strömungsrichtung 29 verlaufenden Reihe von konzentrisch angeordneten Kugelringen 30 gebildet ist. Die Kugelringe 30 sind in einer gemeinsamen Querebene angeordnet, wobei der Abstand der Querebenen benachbarter Kugelreihen im Wesentlichen mit dem Durchmesser der Kugeln 28 übereinstimmt. Der Durchmesser der Kugeln beträgt ca. 1 mm.

Nachdem die Kammer 21 mit den Kugeln 28 gefüllt worden ist, wird das Einsatzelement 23 in den Querkanal 18 eingesetzt, wobei die Verengung des Querkanals 18 am Übergang zwischen dem breiten Abschnitt 20 und dem schmalen Abschnitt 21 einen Anschlag für die Düsenscheibe 26 bildet. Nachfolgend wird an der verschlussscheibe 25 eine dichte Verriegelung des Einsatzelementes 23 in dem Querkanal 18 bewirkt.

Die Durchtrittskanäle 27 sind als Durchtrittsdüsen ausgebildet, deren Durchmesser in einem Bereich von 0,5 mm bis 0,8 mm liegen. Im vorliegenden Ausführungsbeispiel weisen die beiden Durchtrittsdüsen einen Durchmesser von 0,7 mm auf.

Die einzelnen Kugeln 28 bilden Abscheidungsflächen, die in Strömungsrichtung 29 durchbrochen sind und an denen eine Benetzung durch die Schmierstoffpartikel erfolgt, die durch die Durchtrittsdüsen 27 als Bestandteil des Schmierstoffnebels in die Kammer 21 eintreten.

Die Bereitstellung von Schmierstofftropfen an der Schmierstelle 3' erfolgt nach folgendem verfahren. Der in der Vernebelungseinrichtung 2 erzeugte Schmierstoffnebel wird durch die Einlassöffnungen 9 in den Kanal 17 unter Druck eingespeist. Der Schmierstoffnebel kann nur durch die Durchtrittsdüsen 27 des Einsatzelementes 23 in die Kammer 21 eindringen, wobei aufgrund der Querschnittsverminderung ein Venturi-Effekt eintritt. Hierdurch wird bereits der Abscheidungsprozess der Schmierstoffpartikel von dem gasförmigen Trägermedium (Druckluft) eingeleitet. Dadurch, dass die Strömung nachfolgend in die mit der Kugelpackung versehenen Kammer 21 eintritt und durchgeleitet wird, wird der Abscheidungsgrad des Schmierstoffes weiter erhöht, so dass an der Auslassöffnung 12 Schmierstofftropfen im mm-Bereich bereitgestellt werden können. Diese Schmierstofftropfen werden zusammen mit der Druckluft abgegeben.

Durch den in der Kammer 21 sich vollziehenden Trennprozess ergibt sich eine Schmierstoff-Rückgewinnung von mindestens 98%. Die Kanäle 17, 18 werden mit einem Strömungsdruck des Schmierstoffnebels bzw. der Druckluftströmung von etwa 0,5 bis 1,5 bar beaufschlagt.

In dem vorliegenden Ausführungsbeispiel dient das in die Ausnehmung 19 eingesetzte Umlenkelement zum Umlenken der Wälzkörper des Druckluftstromes sowie der Schmierstofftropfen zu den unterschiedlichen Teilschmierstellen der Wälzlagerführung. Zu diesem Zweck sind an der Auslassöffnung 12 bzw. in einem Auslassbereich des Umlenkelementes ein umlaufendes Dichtelement 31 vorgesehen.

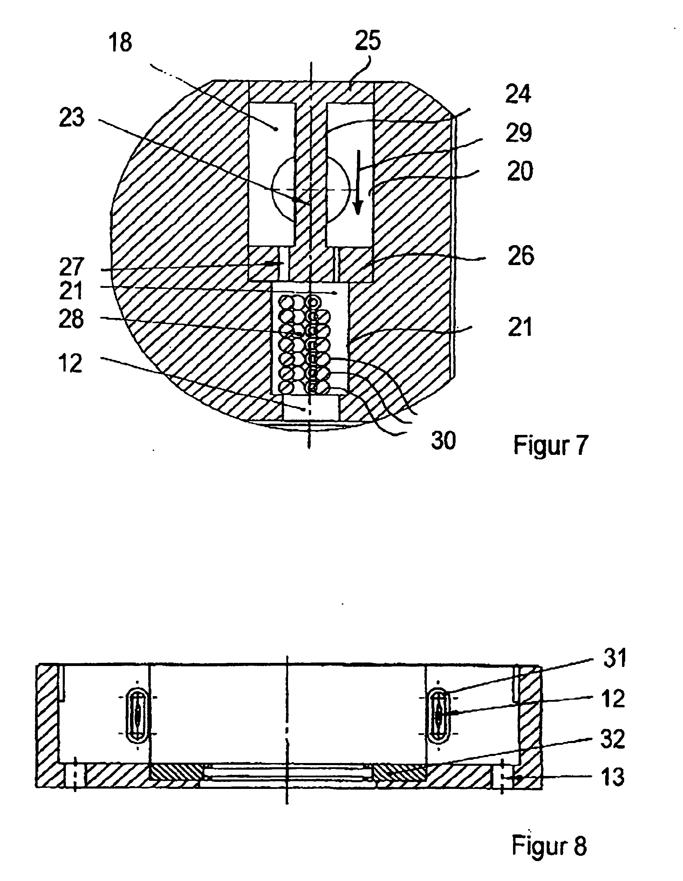

Wie insbesondere aus Figur 8 ersichtlich ist, ist zwischen dem Grundkörper 14 und der Führungsschiene 6 ein Dichtelement 32 angeordnet, das zusammen mit weiteren nicht dargestellten Dichtelementen zu einer hermetischen drucksicheren Abriegelung der Luft und des Öls führt.

Nach einer alternativen Ausführungsform der Dichtelemente 31, 32, können diese auch an einer Innenwandung des Grundkörpers 14 angespritzt sein.

Nach einer alternativen Ausführungsform kann ein Trennelement 50 mit einer Kugelpackung vorgesehen sein und in die Kammer 21 einsteckbar ausgebildet sein. Die Dimension des Trennelementes 50 kann an die Dimension der Kammer 21 angepasst sein.

Durch die Ausbildung eines so ausgebildeten hohlzylinderförmigen Trennelementes 50 kann die Montage wesentlich vereinfacht werden.

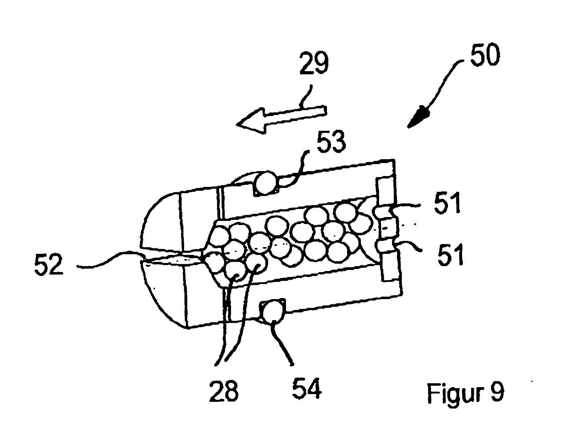

wie aus Figur 9 zu ersehen ist, ist das Trennelement 50 (Schmierpatrone) als Hohlzylinder ausgebildet, wobei sie an einer in Strömungsrichtung hinten liegenden Stirnseite zwei kreisförmige Durchtrittskanäle 51 zum Eintritt des Schmierstoffnebels aufweist. Der Durchmesser der beiden Durchtrittskanäle 51 ist auf die Größe der innerhalb des Trennelementes 50 gepackten Kugeln 28 abgestimmt, so dass keine Kugel 28 den Innenraum des Hohlzylinders verlassen kann. Der Durchmesser der Durchtrittskanäle 51 kann in einem Bereich von 0,5 bis 0,8 mm liegen und ist damit kleiner als der Durchmesser der Kugeln 28. Der in Strömungsrichtung 29 vorne liegende Auslass ist als kreuzschlitzförmiger Auslass 52 ausgebildet, wobei die Breite des Schlitzes kleiner ist als der Durchmesser der Kugeln 28. Die Breite der X-förmig oder senkrecht zueinander stehenden Schlitze, die in einem Mittelpunkt zusammentreffen, kann in einem Bereich von 0,4 bis 0,65 mm liegen. Vorteilhaft erstreckt sich der Schlitz über die gesamte Breite des hohlzylinderförmigen Trennelementes 50, wobei die Hauptaustrittsfläche in der Mitte auf der Längsachse des Trennelementes 50 angeordnet ist. Die Gesamtaustrittsfläche dieses kreuzförmigen Schlitzes ist größer als die Gesamteintrittsfläche der Durchtrittskanäle 51. Hierdurch wird ein zu hoher Strömungsstau vermieden, der zu einer unerwünschten Zerstäubung der in diesem Bereich bereits von der Druckluft getrennten Schmierstofftropfen führen würde. Wesentlich ist, dass die Länge der Schlitze größer als der doppelte Durchmesser der Kugeln 28 ist, so dass ein weitgehendes Verschließen des Auslasses 52 durch die Kugeln 28 verhindert wird.

Zur vereinfachten Montage des Trennelementes 50 weist diese eine Umfangsnut 53 auf, in der ein O-Ring 54 angeordnet ist, so dass der O-Ring 54 etwas von der Mantelfläche des Trennelementes 50 abragt. Hierdurch ist auf einfache weise ein dichter Sitz des Trennelementes 50 in der Kammer 21 gewährleistet. Der Durchmesser des Trennelementes 50 ist auf den Innendurchmesser der Kammer 21 abgestimmt, so dass das Trennelement 50 passgenau in derselben angeordnet ist, insbesondere durch Presssitz. Dadurch, dass sich in dem breiten Abschnitt 20 das Einsatzelement 23 anschließt, ist das Trennelement 50 in der Kammer 21 sicher gehalten.

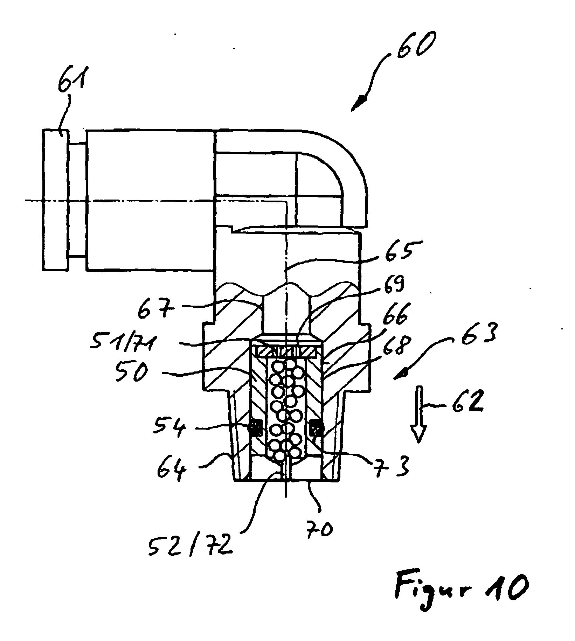

In Figur 10 ist ein Verbindungselement 60 dargestellt, das zur lösbaren Verbindung der oben dargestellten und den Schmierstoffnebel transportierenden Zuführleitung 4 mit einem Gehäuse an der Schmierstelle 3, 3' dient. Im Unterschied zu dem oben beschriebenen Ansatzteil 8 ist das Verbindungselement 60 flexibel und vielseitig einsetzbar, da es über einen ersten verbindungsanschluss 61 mit handelsüblichen pneumatischen oder hydraulischen zuführleitungen 4 verbindbar ist. Der erste Verbindungsanschluss 61 ist vorzugsweise als handelsüblicher Steckanschluss ausgebildet, der mit einer pneumatischen Zuführleitung 4 verbunden ist.

Alternativ kann der verbindungsanschluss 61 auch als Schraubanschluss ausgebildet sein, der mit einer hydraulischen Zuführleitung 4 verbindbar ist.

Auf einer in Strömungsrichtung Pfeil 62 vorne liegenden Seite des Verbindungselementes 60 ist ein zweiter Verbindungsanschluss 63 als Schraubanschluss angeordnet zur Verbindung des Verbindungselementes 60 mit einem nicht dargestellten Gehäuse der Schmierstelle 3, 3'. Der zweite Verbindungsanschluss 63 weist ein Außengewinde 64 auf, mittels dessen das Verbindungselement 60 kraftschlüssig mit einem nicht dargestellten Innengewinde des Gehäuses verbindbar ist. Die Symmetrieachse 65 des zweiten Verbindungsanschlusses 63 bzw. des Außengewindes 64 ist vorzugsweise in radialer Richtung zu dem hohlzylinderförmigen Gehäuse der Schmierstelle orientiert. Das Gehäuse kann beispielsweise ein Teil eines Kugelgewindetriebs, einer Arbeitsspindel, eines Rundschalttisches, von Wälzlagerführungen, von Mehrspindelköpfen oder dergleichen ausgebildet sein. Dabei weist das Außengewinde 64 eine solche Tiefe auf, dass das freie Ende des zweiten Verbindungsanschlusses 63 unmittelbar an die Schmierstelle 3, 3' reicht.

In der vorliegenden Ausführungsform gemäß Figur 10 ist das Verbindungselement 60 winkelförmig ausgebildet. Alternativ kann das Verbindungselement 60 auch gerade oder schief ausgebildet sein.

Das Verbindungselement 60 weist im Bereich des zweiten Verbindungsanschlusses 63 einen Hohlraum 66 zur Aufnahme eines Trennelementes 50 bzw. einer Schmierpatrone 50 auf. Der Hohlraum 66 ist verbreitert im Vergleich zu dem durch den übrigen Bereich des Verbindungselementes 60 angeordneten Kanal 67 zur Durchführung des Schmierstoffnebels ausgebildet.

Das Trennelement 50 ist eine alternative Ausführungsform der Tropfenabscheidungseinrichtung 5. Zu diesem Zweck weist das Trennelement 50 eine hohlzylinderförmige Kammer auf, in der eine Mehrzahl von durchbrochenen Abscheidungsflächen 28 angeordnet sind. Das Trennelement 50 gemäß Figur 10 entspricht dem Trennelement gemäß Figur 9 und weist im wesentlichen zylindrische Mantelflächen 68 auf, die endseitig zum einen von einer senkrecht zur Strömungs richtung 62 und in Strömungsrichtung 62 hinten angeordneten Stirnfläche 69 und zum anderen von einer in senkrecht zur Strömungsrichtung 62 und in Strömungsrichtung 62 vorne angeordneten Auslassfläche 70 begrenzt ist. Die Stirnfläche 69 weist zwei Durchtrittsöffnungen 71 auf, durch die der Schmierstoffnebel in die Kammer eintritt. Die Auslassfläche 70 weist zwei kreuzförmig angeordnete Auslassschlitze 72 auf, die jeweils durchgehend und geradlinig zwischen gegenüberliegenden Bereichen der Mantelfläche 68 verlaufen. Die in Strömungsrichtung 62 verlaufende Erstreckung der Auslassschlitze 72 ist mindestens so lang wie die Länge der Durchtrittsöffnung 51, vorzugsweise länger.

Die Auslassschlitze 72 sind um diese vorgegebene Tiefe in die Mantelflächen 68 eingeschnitten. Die Auslassfläche 70 schließt in der montierten Position vorzugsweise bündig mit dem freien Ende des zweiten Verbindungsanschlusses 63 ab.

Die Breite des Auslassschlitzes 72 kann dem Durchmesser der Durchtrittsöffnungen 71 entsprechen, beispielsweise 0,5 mm. Die Länge des Trennelementes 50 kann beispielsweise 12 mm betragen.

Zur Montage des Trennelementes 50 in den dem zweiten Verbindungsanschluss 63 zugeordneten Hohlraum des Verbindungselementes 60 weist das Trennelement 50 einen O-Ring 54 auf, der in einer Außenringnut 73 der Mantelfläche 68 gelagert ist. Das Trennelement 50 ist nach verpressendem Einsetzen in den Hohlraum des Verbindungselementes 60 formschlüssig, sicher und dicht mit dem Verbindungselement 60 verbunden.

Vorteilhaft kann somit das Trennelement 50 in ein Verbindungselement 60 integriert werden, so dass das Verbindungselement einen kompakten Aufbau hat. Es weist eine Doppelfunktion auf. Zum einen dient es zum Verbinden der Zuführleitung 4 des Schmierstoffes mit einem Gehäuse der Schmierstelle. Zum anderen erfolgt in dem Verbindungselement 60 die Umwandlung des Schmierstoffnebels in für die Schmierung erforderliche Schmiertropfen.

Alternativ kann das Trennelement 50 unabhängig von dem Verbindungselement 60 unmittelbar in einem Gehäuse an der Schmierstelle 3, 3' angeordnet sein. Wesentlich ist, dass das Trennelement 50 derart in dem Gehäuse integriert ist, dass die Auslassfläche 70 unmittelbar an der Schmierstelle 3, 3' angeordnet ist.

## Patentansprüche

1. Verfahren zum Schmieren von Schmierstellen mit Schmierstoff-Minimalmengen, bei dem der Schmierstoff mit einem gasförmigen Trägermedium zu einem Schmierstoffnebel vermischt wird und bei dem der Schmierstoffnebel der Schmierstelle zugeführt wird, dass der Schmierstoffnebel zum Abtrennen von Schmierstofftropfen unter Druck in eine langgestreckte Kammer (21) mit verteilt angeordneten und in Längsrichtung der Kammer (21) durchbrochenen Abscheidungsflächen (28) eingespritzt wird, so dass der Schmierstoff unter fortgesetzter Benetzung der Abscheidungsflächen (28) durch die Kammer in Richtung einer Auslassöffnung (12) hindurchbewegt wird und in Form von Schmierstofftropfen die Auslassöffnung (12) verlässt, **dadurch gekennzeichnet, dass** der Schmierstoffnebel durch eine Durchtrittsdüse (27, 51) unter erhöhter Geschwindigkeit in die Kammer (21) eingespritzt wird, und dass die Gesamtfläche der Auslassöffnung (12, 52) größer ist als die Gesamtöffnungsfläche der Durchtrittsdüse (27, 51)

2. Verfahren nach Anspruch 1, **dadurch gekennzeichnet, dass** der Schmierstoffnebel kontinuierlich in die mit Abscheidungsflächen (28) versehene Kammer (21) eingespritzt wird.

3. Verfahren nach Anspruch 1 oder 2, **dadurch gekennzeichnet, dass** der Druck des Schmierstoffnebels gesteuert wird.

4. Vorrichtung zum Schmieren von Schmierstellen mit Schmierstoff-Minimalmengen mit einer Vernebelungseinrichtung zum Erzeugen eines Schmierstoffnebels, der aus einem Gemisch von gasförmigem Trägermedium und Mikrotropfen des Schmierstoffes gebildet ist, dass die Vernebelungseinrichtung (2) über eine Zuführleitung (4) mit einer im Bereich der Schmierstelle (3, 3') angeordneten Tropfenabscheidungseinrichtung (5) zur Bildung von Schmierstofftropfen verbunden ist, wobei durch eine der Tropfenabscheidungseinrichtung (5) nachgeordnete Auslassöffnung (12) zum einen die Schmierstofftropfen und zum anderen im wesentlichen das gasförmige Trägermedium an die Schmierstelle (3, 3') abgebbar sind, dass die Tropfenabscheidungseinrichtung (5, 50) eine Kammer (21) mit in Strömungsrichtung (29) durchbrochenen Abscheidungsflächen (28) aufweist, an denen die durch einen Durchtrittskanal (27, 51) eingespritzten Schmierstoffpartikel des Schmierstoffnebels anhaften, **dadurch gekennzeichnet, dass** der Durchtrittskanal (27, 51) als eine Durchtrittsdüse (27, 51) ausgebildet ist, durch die der Schmierstoffnebel unter erhöhter Geschwindigkeit in die Kammer (21) eingespritzt wird, und dass die Gesamtfläche der Auslassöffnung (12, 52) größer ist als die Gesamtöffnungsfläche der Durchtrittsdüse (27, 51).

5. Vorrichtung nach Anspruch 4, **dadurch gekennzeichnet, dass** sich die Abscheidungsflächen (28) gleichmäßig und in gleicher Form in Strömungsrichtung (29) innerhalb der Kammer (21) erstrecken.

6. Vorrichtung nach Anspruch 4 oder 5, **dadurch gekennzeichnet, dass** der Durchmesser der Durchtrittsdüse in einem Bereich von 0,5 mm bis 0,8 mm liegt.

7. Vorrichtung nach einem der Ansprüche 4 bis 6, **dadurch gekennzeichnet, dass** eine oder mehrere um die Mittelachse der Kammer (21) angeordnete Durchtrittsdüsen (27, 51) vorgesehen sind.

8. Vorrichtung nach einem der Ansprüche 4 bis 7, **dadurch gekennzeichnet, dass** die Auslassöffnung (12) als ein Schlitz ausgebildet ist, dessen Länge größer ist als der doppelte Durchmesser der Kugeln (28).

9. Vorrichtung nach einem der Ansprüche 4 bis 8, **dadurch gekennzeichnet, dass** der Schlitz (12) kreuzförmig ausgebildet ist, wobei der Verbindungspunkt der Schlitze auf der Längsachse der Kammer (21) liegt.

10. Vorrichtung nach einem der Ansprüche 4 bis 9, **dadurch gekennzeichnet, dass** die Tropfenabscheidungseinrichtung (5) als ein einsteckbares Trennelement (50) ausgebildet ist
- mit einer hohlzylinderförmigen Kammer, in der eine Mehrzahl von durchbrochenen Abscheidungsflächen (28) angeordnet ist,
- mit einer im wesentlichen kreisförmigen Mantelfläche (68),
- mit einer senkrecht zur Strömungsrichtung (62) und in Strömungsrichtung (62) hinten angeordneten Stirnfläche (69) enthaltend mindestens die Durchtrittsdüse (51) und
- mit dem senkrecht zur Strömungsrichtung (62) und in Strömungsrichtung (62) vorne angeordneten Auslass (52) enthaltend mindestens einen Auslassschlitz (72).

11. Vorrichtung nach Anspruch 10, **dadurch gekennzeichnet, dass** sich der Auslassschlitz (72) zumindest von innen bis in einen Bereich der Mantelfläche (68) erstreckt und entgegen der Strömungsrichtung (62) in die Mantelflächen (68) eingeschnitten ist.

12. Vorrichtung nach Anspruch 10 oder 11, **dadurch gekennzeichnet, dass** die Mantelfläche (68) eine Außenringnut (73) aufweist zur Aufnahme eines O-Rings (54).

## Claims

1. Method for lubricating lube points with minimum lubricant quantities wherein a lubricant is mixed with a gaseous carrier medium to form a lubricant mist, wherein said lubricant mist is fed to a lube point and wherein the lubricant mist is under pressure injected into an elongated chamber (21) with separator means 28 which are staggered and spaced apart in longitudinal direction of said chamber (21) such that the lubricant is passed through the chamber toward an outlet opening while continually impinging said separator means (28) and discharged from the outlet opening (12) in the form of lubricant droplets, **characterized by** the fact that the lubricant mist is injected into the chamber (21) with increased velocity across an injection nozzle (27, 51) and that the total area of the outlet opening (12, 52) is larger than the total opening area of the injection nozzle (27, 51).

2. Method as set forth in Claim 1, **characterized by** the fact that the lubricant mist is continuously injected into the chamber (21) provided with separator means (28).

3. Method as set forth in Claim 1 or 2, **characterized by** the fact that the pressure of the lubricant mist is controlled.

4. Apparatus for lubricating lube points with minimum lubricant quantities comprising an atomizer unit to produce a lubricant mist in form of a mixture consisting of a gaseous carrier medium and micro droplets of a lubricant wherein the atomizing means (2) is via a feed line communicated to the droplet separator means (5) to generate lubricant droplets, wherein on the one hand said lubricant droplets and on the other hand substantially the gaseous carrier medium may be given off to a lube point (3, 3') through an outlet opening (12), and wherein the droplet separator means (5, 50) comprises a chamber (21) with separator means (28) which are spaced apart in a flow direction (29) and to which the particles of the lubricant mist as injected via a port (27, 51) are caused to adhere, **characterized by** the fact that said port (27, 51) is provided as an injection nozzle (27, 51) across which the lubricant mist is injected into the chamber (21) with increased velocity and that the total area of the outlet opening (12, 52) is larger than the total area of the injection nozzle (27, 51).

5. Apparatus as set forth in Claim 4, **characterized by** the fact the separator elements (28) extend uniformly and in identical form in flow direction (29) within the chamber (21).

6. Apparatus as set forth in Claim 4 or 5, **characterized by** the fact that the diameter of the injection nozzle is in the range from 0.5 mm to 0.8 mm.

7. Apparatus as set forth in Claims 4 to 5, **characterized by** the fact that one injection nozzle or a plurality of injection nozzles (27, 51) disposed around the centerline of the chamber (21) are provided.

8. Apparatus as set forth in Claim 4 to 7, **characterized by** the fact the outlet opening (12) is a slot whose length is greater than twice the diameter of the balls 28.

9. Apparatus as set forth in any of the preceding Claims 4 to 8, **characterized by** the fact that the slot (12) is a cruciform arrangement and that the junction of the slot members is positioned on the longitudinal axis of the chamber (21).

10. Apparatus as set forth in any of the preceding Claims 4 to 9, **characterized by** the fact that the droplet separator means (5) is a plug-in type separator element (50) comprising a hollow cylindrical chamber having a plurality of spaced-apart separator elements (28) disposed therein; a substantially circular surface shell (68); an end face (69) disposed rearwardly and perpendicularly as viewed in flow direction 62; and an outlet (52) disposed forwardly as viewed in flow direction (62) which comprises at least one outlet slot (72).

11. Apparatus as set forth in Claim 10, **characterized by** the fact that the outlet slot (72) extends up to an area of the surface shell (68) at least on the inside and is cut into said surface shell (68) against the flow direction (62).

12. Apparatus as set forth in Claim 10 or 11, **characterized by** the fact that the shell surface (68) is provided with an outer circular groove (73) adapted to receive an O-ring (54).

## Revendications

1. Procédé pour la lubrification de points de lubrification avec des quantités minimales de lubrifiant dans le cadre duquel le lubrifiant est mélangé avec un agent porteur sous forme gazeuse pour former un brouillard de lubrifiant, et dans lequel ledit brouillard de lubrifiant est conduit au point de lubrification, que le brouillard de lubrifiant, pour condenser des gouttes de lubrifiant, étant injecté sous pression dans une chambre (21) de forme allongée, avec des surfaces de collecte (28) perforées, et agencées, réparties, dans la direction longitudinale de la chambre (21), de sorte que le lubrifiant est conduit à travers ladite chambre, en direction d'une ouverture de sortie (12), en mouillant continuellement les surfaces de condensation (28), et sort par ladite ouverture de sortie (12) sous la forme de gouttes de lubrifiant, **caractérisé en ce que** le brouillard de lubrifiant est injecté à vitesse accélérée dans la chambre (21) par une buse d'injection (27, 51), et que la surface totale de l'ouverture de sortie (12, 52) est plus grande que la surface totale de l'ouverture de la buse d'injection (27, 51).

2. Procédé selon la revendication 1, **caractérisé en ce que** le brouillard de lubrifiant est injecté en continu dans la chambre (21) pourvue de surfaces de condensation 28).

3. Procédé selon revendication 1 ou 2, **caractérisé en ce que** la pression du brouillard de lubrifiant est commandée.

4. Dispositif pour la lubrification de points de lubrification avec des quantités minimales de lubrifiant, avec un dispositif de pulvérisation pour la génération d'un brouillard de lubrifiant qui est formé d'un mélange d'agent porteur sous forme gazeuse et de microgouttes de lubrifiant, que le dispositif de pulvérisation (2) est relié, par l'intermédiaire d'une conduite d'amenée (4), à un dispositif de condensation de gouttes agencé dans la région du point de lubrification pour la formation de gouttes de lubrifiant, les gouttes de lubrifiant, d'une part, et, en grande partie, l'agent porteur gazeux, d'autre part, pouvant être délivrés au point de lubrification (3, 3'), par une ouverture de sortie (12), agencée en aval du dispositif de condensation de gouttes (5), que le dispositif de condensation de gouttes (5, 50) présente une chambre (21) avec des surfaces de condensation (28), perforées dans la direction d'écoulement (29), auxquelles adhèrent des particules de lubrifiant du brouillard de lubrifiant injectées par un canal de passage (27, 51), **caractérisé en ce que** le canal de passage (27, 51) est conçu en tant que buse d'injection (27, 51) par laquelle le brouillard de lubrifiant est injecté dans la chambre (21) à une vitesse accélérée, et **en ce que** la surface totale de l'ouverture de sortie (12, 52) est plus grande que la surface de sortie totale de la buse d'injection (27, 51).

5. Dispositif selon la revendication 4, **caractérisé en ce que** les surfaces de condensation (28) s'étendent régulièrement et en présentant la même forme, dans la direction d'écoulement (29), à l'intérieur de la chambre (21).

6. Dispositif selon revendication 4 ou 5, **caractérisé en ce que** le diamètre de la buse d'injection est situé dans une plage de 0,5 mm à 0,8 mm.

7. Dispositif selon l'une des revendications 4 à 6, **caractérisé en ce qu'**une ou plusieurs buses d'injection (27, 51) sont prévues, agencées autour de l'axe médian de la chambre (21).

8. Dispositif selon l'une des revendications 4 à 7, **caractérisé en ce que** l'ouverture de sortie (12) est conçue sous la forme d'une fente dont la longueur est plus grande que le double diamètre des billes (28).

9. Dispositif selon l'une des revendications 4 à 8, **caractérisé en ce que** la fente (12) présente la forme d'une croix, le point de liaison de la fente étant situé sur l'axe longitudinal de la chambre (21).

10. Dispositif selon l'une des revendications 4 à 9, **caractérisé en ce que** le dispositif de condensation de gouttes est conçu en tant qu'élément de séparation (50) enfichable,
- avec une chambre en forme de cylindre creux dans laquelle sont aménagées plusieurs surfaces de condensation nperforées (28)
- avec une surface de manteau sensiblement circulaire (68),
- avec une surface frontale (69) agencée perpendiculairement à la direction d'écoulement (62) et en aval dans la direction d'écoulement (62), laquelle comprend au moins une buse d'injection (51), et
- avec la sortie (52), agencée perpendiculairement à la direction d'écoulement (62), et en amont de la direction d'écoulement (62), comprenant au moins une fente de sortie (72).

11. Dispositif selon la revendication 10, **caractérisé en ce que** la fente de sortie (72) s'étend au moins de l'intérieur jusqu'à dans une zone de la surface du manteau (68) et est découpée dans les surfaces du manteau (68), à l'opposé de la direction d'écoulement (62).

12. Dispositif selon revendication 10 ou 11, **caractérisé en ce que** la surface du manteau (68) présente une rainure annulaire externe (73), destinée à recevoir un joint torique (54).
